# EUROPEAN PATENT APPLICATION

(11) **EP 1 650 939 A1**
(43) Date of publication of application: **26.04.2006**
(21) Application number: 03775867.9
(22) Date of filing: 21.11.2003
(51) Int. Cl.: H04M 3/00, H04M 11/00, H04Q 3/62

(54) **GATEWAY DEVICE, PRIVATE BRANCH EXCHANGE SYSTEM, AND PRIVATE BRANCH EXCHANGE METHOD**

(30) Priority: 29.07.2003 JP 2003282080
(71) Applicant: Softbank BB Corp., Tokyo 105-7304 (JP)
(72) Inventor: SON, Masayoshi, Minato-ku, Tokyo 106-0041 (JP)
(74) Representative: Grünecker, Kinkeldey, Stockmair & Schwanhäusser Anwaltssozietät
(86) International application number: PCT/JP2003/014937
(87) International publication number: WO 2005/011239

(57) **Abstract**

Connection with the Internet is possible without modifying the existing public telephone network while keeping the call hunting facility in cooperation with a private branch exchange.

In the case where a switched connection is made between an ISDN network 7 and a PBX 1, the PBX 1 is connected selectively to either the ISDN network 7 or the Internet 5 and, while the use condition of a communication line to the PBX 1 is detected, a notification is output to indicate that only calling is viable through the public telephone network (a one-way outgoing calls only setting signal is transmitted) if the communication line to the PBX 1 is in use.

## Description

### Field of the Invention

The present invention relates to a gateway device installed between a public telephone network and a private branch exchange, a gateway device, a private branch exchange system and an extension telephone switching method for switchingly connecting between a public telephone network and an extension telephone.

### Background Art

As is known in the art, an extension telephone exchange (PBX: Private Branch exchange) is used to connect extension telephones in the office of a company or the like thereamong or to a public telephone network such as a public switched telephone network or an ISDN line, and by this private branch exchange it is possible to receive a call at the main switchboard number through another telephone line in the case where there are a plurality of external phone lines in the company or the like.

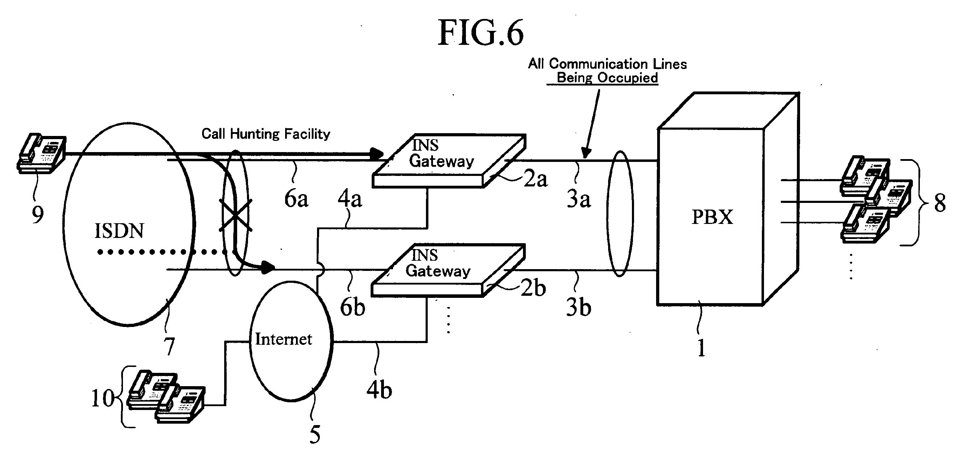

Also, in recent years, Internet telephone services that use the Internet as part of the communication line by converting voice signals into data signals. INS gateway devices have been developed as equipments for making use of the Internet telephone services in combination with the private branch exchange. Fig. 6 is an explanatory view for schematically showing the configuration of a conventional INS gateway device.

As shown in the figure, there are a plurality of INS gateway devices each of which is connected between a PBX 1 and an ISDN network 7 which is a public telephone network, in order to realize the so-called call hunting facility that is capable of transferring an incoming call to a free one of a plurality of telephone lines. More specifically speaking, in the case where a call at the main switchboard number is accepted by the INS gateway device 2a and connected to any one of extension telephone equipments 8 through the PBX 1, for example, the ISDN network side communication line 6a and the PBX side communication line 3a which are connected to the INS gateway device 2a are being used. In such a case, on the basis of the fact that the ISDN network side communication line 6a is in use, it can be recognized in the side of the ISDN network 7 that the PBX side communication line 3a between the INS gateway device 2a and the PBX 1 is in use, and therefore when there is a next incoming call at the main switchboard number the INS gateway device 2b is used to receive the incoming call by proxy through the ISDN network side communication line 6b to establish a communication with the PBX 1 through the PBX side communication line 3b.

Also, in the case where this type of the INS gateway device is used for the Internet telephone, voice conversation with a telephone equipment 10 connected to the Internet 5 is done, for example, by transmitting voice signals from the PBX 1 to the INS gateway device 2a through the PBX side communication line 3a, converting the voice signals by the INS gateway device 2a into data signals, and then transmitting the data signals to the Internet 5 through the communication line 4a for the Internet (for example, Japanese Patent Published Application No. Hei 2001-144854).

### Summary of the Invention

However, in the case of the conventional INS gateway device as described above, while the PBX side communication line 3a is in use for example when a connection with the Internet 5 is established through the INS gateway device 2a, the ISDN network side communication line 6a is not in use, and thereby it can not be recognized in the side of the ISDN network 7 that the INS gateway device 2a is being in use.

Because of this, if there is an incoming call at the main switchboard number while the INS gateway device 2a is connected to the Internet 5 and the PBX side communication line 3a is in use, the connection process to the INS gateway device 2a is performed in the side of the ISDN network 7 rather than to the other INS gateway device 2b by proxy. Accordingly, as long as the PBX side communication line 3a is in use by the Internet telephone, proxy connection is always not performed, so that there is a problem that even if another communication line is available the call hunting facility cannot work.

The present invention is invented taking into consideration the above situation, and it is an object thereof to provide a gateway device, a private branch exchange system and an extension telephone switching method in which connection with the Internet is possible without modifying the existing public telephone network while keeping the call hunting facility in cooperation with a private branch exchange.

In order to accomplish the object as described above according to the present invention, in the case where a switched connection is made between a public telephone network and the private branch exchange, the private branch exchange is connected selectively to either the public telephone network or the Internet and, while the use condition of a communication line to the private branch exchange is detected, a notification is output to indicate that only a calling process is viable through the public telephone network (a one-way outgoing calls only setting signal is transmitted) if the communication line to the private branch exchange is in use. Also, in the case of the above invention, when the communication line to said extension telephone comes to be in an unused state, a notification is output to indicate that an outgoing call process and an incoming call process are viable (a one-way outgoing calls only releasing signal is transmitted).

In accordance with the present invention, by notifying the public telephone network that only a calling process is viable through a communication line which is used, it is possible to inform the public telephone network of the communication line which is used and avoid the public telephone network trying to make a connection with the communication line which is used. Particularly, the notification that only a calling process is viable can be performed by a standard protocol which is available in an ordinary public telephone network, and thereby the present invention can be implemented without modifying the existing system.

Also, in the case of the above invention, when the communication line to the extension telephone comes to be in an unused state, it is possible to notify the public telephone network that the communication line having been used comes to be in the unused state by transmitting the outgoing calls only releasing signal to the public telephone network, and to perform the incoming call process as usual.

Preferably, in the case of the above invention and in the case where there are a plurality of units each of which serves as the above public telephone network connection unit, when the communication line connected to the private branch exchange of one of the public telephone network connection units is in use, another public telephone network connection unit serves to make a connection by proxy in response to a connection request issued for said one of the public telephone network connection units in accordance with the notification is transmitted. In accordance with the invention as described above, when there is an incoming call at the main switchboard number, it is avoided to try to make a connection the communication line which is in use, to make a proxy connection by another communication line, and to maintain the availability of the call hunting facility.

Preferably, in the case of the above invention, there are provided an identifier generation unit operable to generate a caller identifier for identifying an extension telephone connected to the private branch exchange on the basis of a control signal from the extension telephone, and an intended recipient identifier for identifying a communication device of the intended recipient of the extension telephone; a conversion unit operable to perform conversion between voice signals and packet signals relating to the communication for voice conversation; and a packet transmitter receiver unit operable to transmit the packet signals to and receive the packet signals from the Internet on the basis of the caller identifier and the intended recipient identifier. In accordance with the invention as described above, since voice conversation can be done with an extension telephone by making use of a high speed communication network such as the Internet at a low cost, it is possible to save the communication expense.

Preferably, in the case of the above invention, there are provided a determination unit operable in order that the voice signals are output to the public telephone network without conversion into packet signals depending upon the intended recipient identifier. In accordance with the invention as described above, with respect to the intended recipients such as calls at 110, which are not covered by the Internet telephone service, voice conversation is not carried by the use of packet signals but is carried over the public telephone network.

In accordance with the present invention, it is possible to make a connection with the Internet without modifying the existing public telephone network while keeping the call hunting facility in cooperation with a private branch exchange.

### Brief Description of the Drawings

Fig. 1 is a view for schematically showing the configuration of a private branch exchange system in accordance with an embodiment.
Fig. 2 is a block diagram for showing the internal configuration of the INS gateway device in accordance with the embodiment.
Fig. 3 is a sequence diagram for showing the procedure of the extension telephone switching method in accordance with the embodiment.
Fig. 4 is a flow chart for showing the process of determining whether or not the Internet telephone service is to be used for connection.
Fig. 5 is a sequence diagram for showing the procedure of the process to be taken when a communication line transitions to its unused state in accordance with the extension telephone switching method of the embodiment.
Fig. 6 is an explanatory view for schematically showing a conventional INS gateway device.

### Best Mode for Carrying Out the Invention

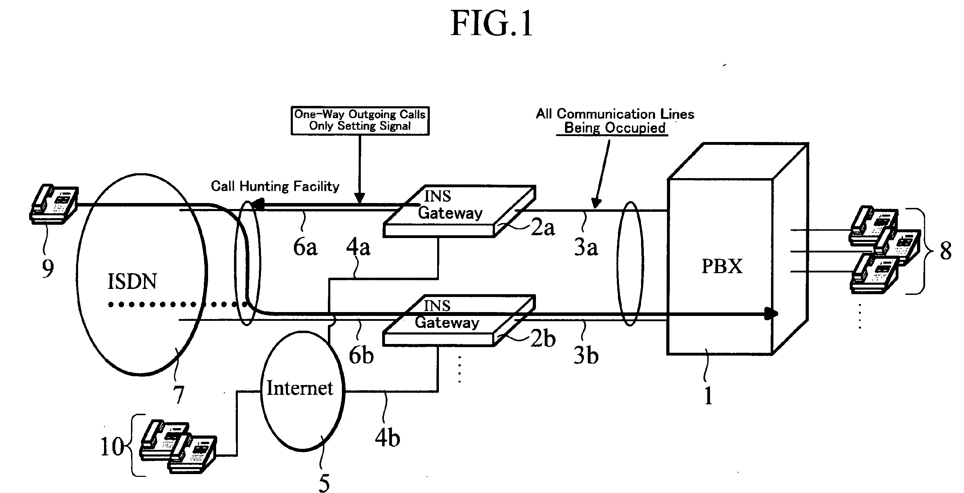

An embodiment of the present invention will be explained with reference to the accompanying drawings. Fig. 1 is a view showing the schematic configuration of a private branch exchange system in accordance with the present embodiment.

As shown in the figure, the private branch exchange system in accordance with the present embodiment comprises a private branch exchange (PBX) 1, extension telephone equipments 8, and the INS gateway devices 2a, 2b ... which are located between the PBX 1 and the ISDN network 7 and connectable also to the Internet 5. The INS gateway devices 2a, 2b ... are provided in a multiple number between the PBX 1 and the ISDN network 7 which is a public telephone network, in order to realize the so-called call hunting facility that is capable of transferring an incoming call to a free one of a plurality of telephone lines.

In the case where a call at the main switchboard number is accepted by the INS gateway device 2a and connected to any one of extension telephone equipments 8 through the INS gateway device 2a and the PBX 1, it can be recognized in the side of the ISDN network 7 that the PBX side communication line 3a between the INS gateway device 2a and the PBX 1 is in use on the basis of the fact that the ISDN network side communication line 6a is in use, and thereby a function is implemented such that when there is a next incoming call at the main switchboard number the INS gateway device 2b is used to receive the incoming call by proxy through the ISDN network side communication line 6b to establish a communication with the PBX 1 through the PBX side communication line 3b.

In addition, the ISDN network 7 is provided with a capability of recognizing, by receiving a one-way outgoing calls only setting signal from any one of the INS gateway devices 2a, 2b ..., that the communication line through the INS gateway device transmitting this outgoing calls only setting signal is in use, and dispatching the calling process at the main switchboard number to another unused communication line to make a proxy connection with the PBX 1 through the unused communication line and the INS gateway device. In addition to this, the ISDN network 7 is provided with a capability of recognizing, by receiving an outgoing calls only releasing signal, that the communication line which has been recognized as being in use becomes available, and performing the calling process by the call hunting facility as usual.

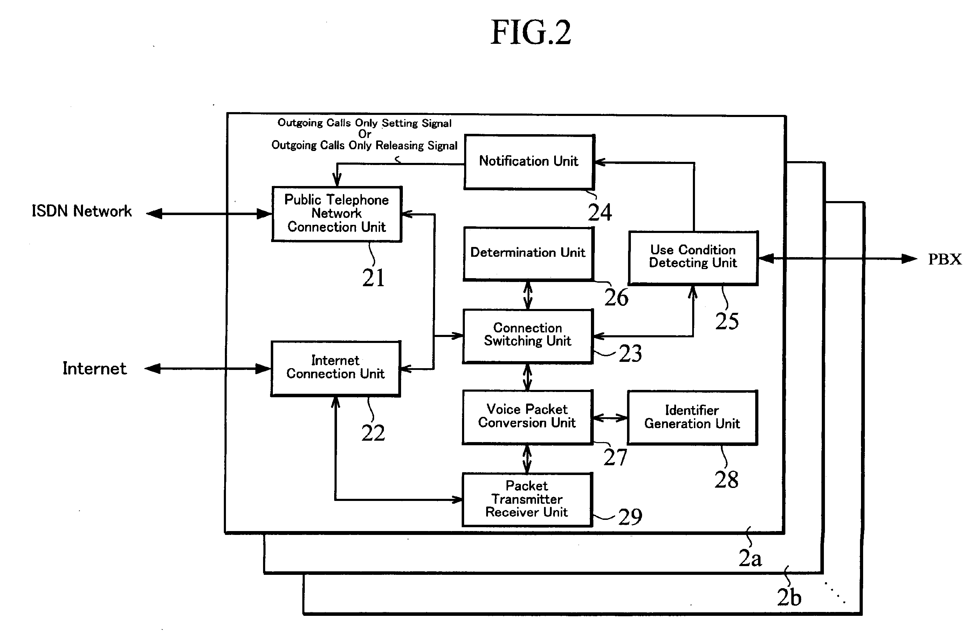

As illustrated in Fig. 2, each of the INS gateway devices 2a, 2b ... is provided with a public telephone network connection unit 21 for connecting the PBX 1 to the ISDN network 7, an Internet connection unit 22 for connecting the PBX 1 to the Internet 5, a connection switching unit 23 for connecting the PBX 1 selectively to either the ISDN network 7 or the Internet 5, a use condition detecting unit 25 for detecting the use condition of the communication line connected to the PBX 1, and a notification unit 24 for transmitting to the ISDN network 7 the outgoing calls only setting signal which indicates that only a calling process is viable through the ISDN network 7 when the communication line to the PBX 1 is in use, and transmitting to the ISDN network the outgoing calls only releasing signal which indicates that both the process of outgoing calls to the ISDN network 7 and the process of incoming calls from the ISDN network 7 are viable when the communication line to the PBX 1 becomes available.

Then, the INS gateway devices 2a, 2b ... are provided in a multiple number, and in the case where the communication line to the PBX 1 of the public telephone network connection unit 21 of any one of the gateway devices (for example, 2a) is in use, the so-called call hunting facility can be realized by performing the connection process through the public telephone network connection unit 21 of another gateway device (for example, 2b) by proxy in accordance with the outgoing calls only setting signal.

Also, each of the INS gateway devices 2a and 2b is provided with an identifier generation unit 28 for generating a caller identifier (an IP address, an extension telephone number and the like) for identifying the extension telephone equipment 8 and an intended recipient identifier (a telephone number for public telephone network, an IP telephone number, an IP address and the like) for identifying the telephone equipment 9 of the intended recipient called from the extension telephone equipment 8 on the basis of a control signal from one of the extension telephone equipments 8, a voice packet conversion unit 27 for converting voice signals of voice communication into packet signals and vice versa, and a packet transmitter receiver unit 29 for transmitting and receiving packet signals to and from the Internet 5. Furthermore, each of the INS gateway devices 2a and 2b is provided with a determination unit 26 which operates in order that voice signals are output to the ISDN network 7 without conversion into packet signals depending upon the telephone number and the like of the intended recipient.

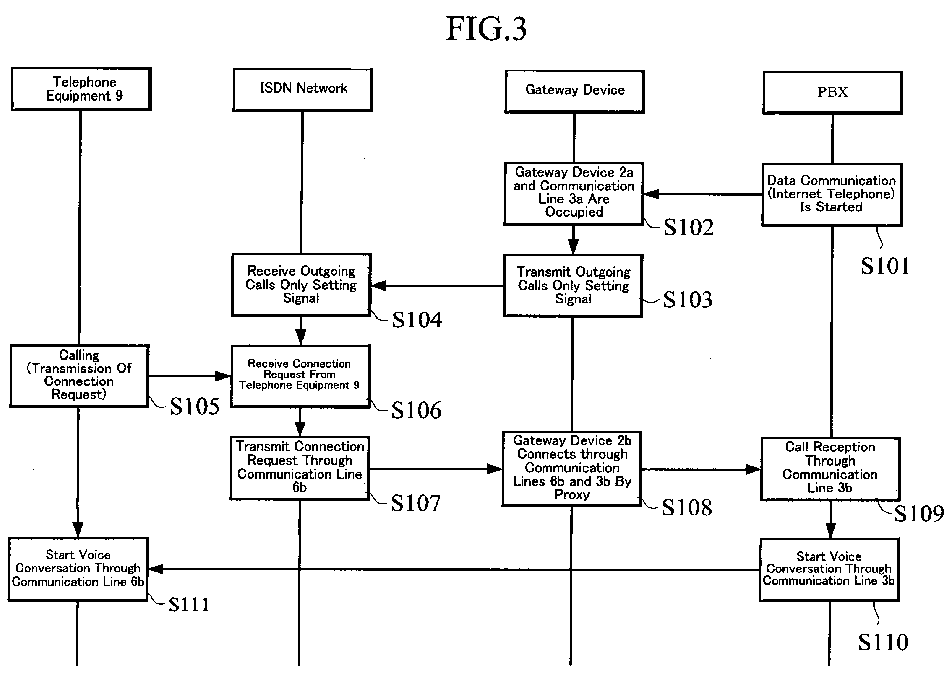

Next, the extension telephone switching method in accordance with the private branch exchange system having the structure as described above will be explained. Fig. 3 is a sequence diagram which shows the procedure of the extension telephone switching method in accordance with the present embodiment.

At first, data communication (Internet telephone) is started by connecting with the INS gateway device 2a through the PBX via the PBX side communication line 3a from the extension telephone equipment 8 in step S101. In other words, the connection switching unit 23 of the INS gateway device 2a serves to connect the PBX 1 and the Internet connection unit 22 by switching the connection, to convert voice signals from the PBX 1 into IP packets by the voice packet conversion unit 27, to add the IP addresses of the caller and the intended recipient to the IP packets, and to transmit them to the Internet 5 through the Internet connection unit 22. When the Internet telephone is used by the INS gateway device 2a as has been discussed above, the PBX side communication line 3a comes to be in use in step S102.

The use condition detecting unit 25 instructs the notification unit 24 to transmit the outgoing calls only setting signal when detecting the connection switching unit 23 is connected to the Internet connection unit 22. In response to this instruction, the notification unit 24 transmits the outgoing calls only setting signal to the ISDN network 7 through the public telephone network connection unit 21 in step S103. At the ISDN network 7, when the outgoing calls only setting signal is received in step S104, it is registered that the ISDN network side communication line 6a connected to the INS gateway device 2a is in use.

Next, in this state, when there is a call at the main switchboard number (transmission of a connection request) to the PBX 1 from the telephone equipment 9 of the ISDN network 7, the ISDN network 7 receiving this connection request does not use the ISDN network side communication line 6a which is notified as being in use, but instead uses the ISDN network side communication line 6b to transmit the connection request to the INS gateway device 2b (in steps S105 to S107). The INS gateway device 2b receives this connection request and connects with the PBX 1 through the PBX side communication line 3b by proxy in step S108. The incoming call process for the extension telephone equipment 8 is performed by the proxy connection of the INS gateway device 2b, and the extension telephone equipment 8 can be used for voice conversation through the PBX side communication line 3b and the ISDN network side communication line 6b.

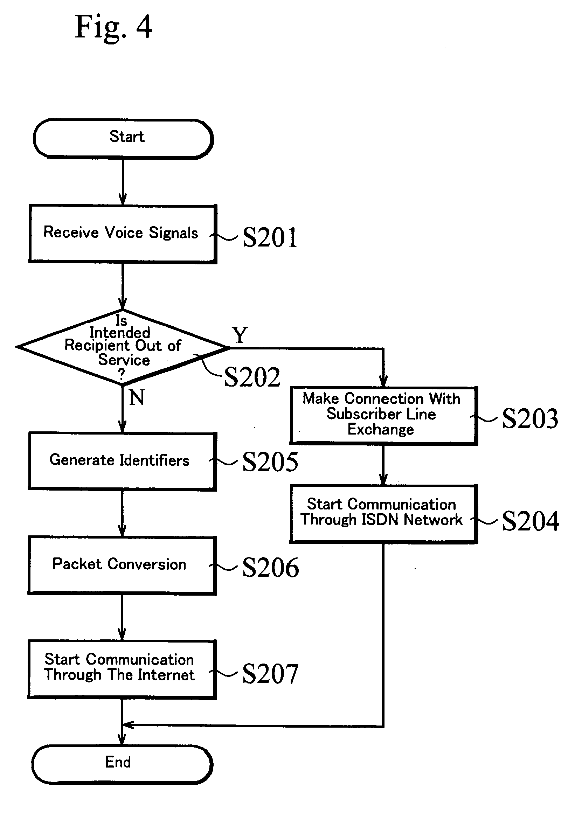

Incidentally, each of the INS gateway devices 2a and 2b in accordance with the present embodiment is provided with the capability of detecting calls, such as calls at 110 and so forth, which are not covered by the Internet telephone service, and transferring such calls, to the ISDN network 7 for connection. Fig. 4 is a flow chart for showing the process of determining whether or not the Internet telephone service is to be used for connection.

First, when a dial operation is performed at the PBX 1, the telephone number of the intended recipient included in voice signals is received by the INS gateway device 2a in step S201. The telephone number of the intended recipient is detected by the determination unit 26 which then serves to determine whether or not the intended recipient is covered by the Internet telephone service in step S202. In the case where the intended recipient is covered by the Internet telephone service, the IP addresses of the caller and the intended recipient are generated by the identifier generation unit 28 in step S205, and the voice signals are converted by the voice packet conversion unit 27 into packet data in step S206 followed by starting the Internet telephone through the Internet 5 in step S207.

On the other hand, in the case where it is determined in step S202 that the intended recipient is not covered by the Internet telephone service, the connection is not made to the Internet 5 but is made to the subscriber line exchange of the ISDN network 7 in step S203, and voice conversation can be started through the ISDN network 7 in step S204.

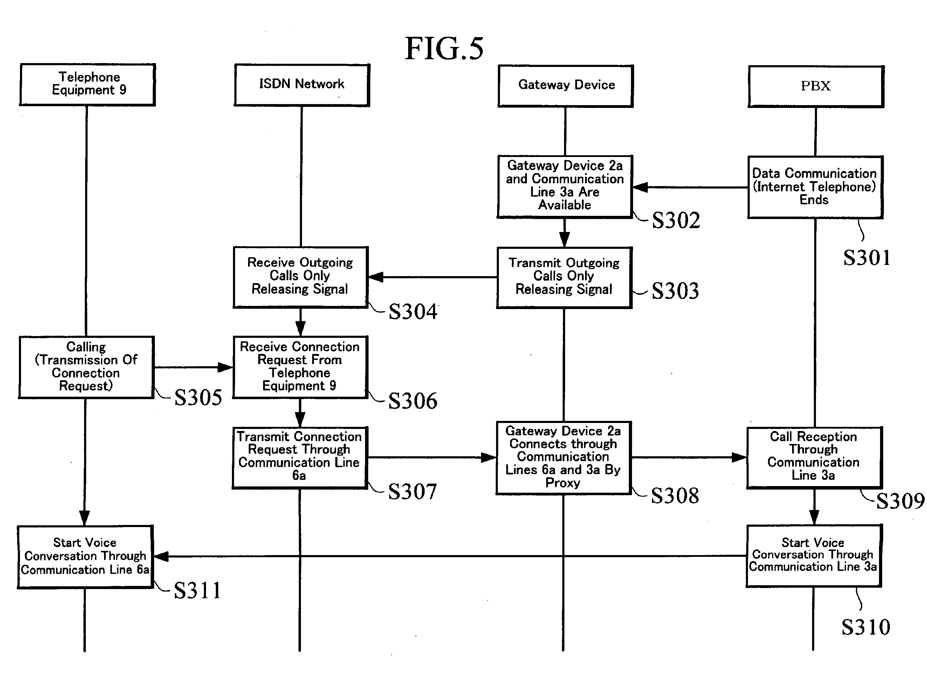

Next is a description of the process to be taken when the communication line, which is notified by the outgoing calls only setting signal as being in use, transitions to its unused state in the case of the present embodiment. Fig. 5 is a sequence diagram for showing the procedure of the process to be taken when the communication line transitions to its unused state in accordance with the extension telephone switching method of the present embodiment.

First, data communication (Internet telephone) performed with an extension telephone equipment 8 through the PBX 1 via the PBX side communication line 3a and the INS gateway device 2a is terminated in step S301. The communication line 3a of the PBX is brought into the unused state in step S302 by terminating the Internet telephone through the INS gateway device 2a as described above.

When detecting that the connection switching unit 23 switches over from the Internet connection unit 22 to the public telephone network connection unit 21, the use condition detecting unit 25 instructs the notification unit 24 to transmit the outgoing calls only releasing signal. In response to this instruction, the notification unit 24 transmits the outgoing calls only releasing signal to the ISDN network 7 through the public telephone network connection unit 21 in step S303. When receiving the outgoing calls only releasing signal in step S304, it is registered at the ISDN network 7 that the ISDN network side communication line 6a connected to the INS gateway device 2a is in its unused state.

Next, in this state, when there is a call at the main switchboard number (transmission of a connection request) to the PBX 1 from the telephone equipment 9 of the ISDN network 7, the ISDN network 7 receiving this connection request transmits a connection request to the INS gateway device 2a through the ISDN network side communication line 6a which has transitioned to the unused state (in steps S305 to S307) . The INS gateway device 2a receives this connection request and connects with the PBX 1 through the PBX side communication line 3a by proxy in step S308. The incoming call process for the extension telephone equipment 8 is performed by the proxy connection of the INS gateway device 2a, and the extension telephone equipment 8 can be used for voice conversation through the PBX side communication line 3a and the ISDN network side communication line 6a.

In accordance with the present embodiment as described above, it is possible to notify the ISDN network 7 of the ISDN network side communication line 6a which is in use by transmitting to the ISDN network 7 the outgoing calls only setting signal which indicates that only the calling process is viable through the ISDN network side communication line 6a which is in use, and to avoid the ISDN network 7 trying to make a connection with the ISDN network side communication line 6a which is in use. In addition to this, when the ISDN network side communication line 6a occupied by data communication comes to be in its unused state, it is possible to notify the ISDN network 7 that the ISDN network side communication line 6a is in the unused state by transmitting the outgoing calls only releasing signal to the ISDN network 7, and to perform the calling process by the call hunting facility as usual.

Furthermore, since the INS gateway devices 2a and 2b determine whether or not the intended recipient is covered by the Internet telephone service on the basis of the telephone number of the intended recipient, it is possible to do voice conversation through the PBX 1 without awareness of whether or not the intended recipient is covered by the Internet telephone service.

## Claims

1. A gateway device to be installed between a public telephone network and a private branch exchange, comprising:
a public telephone network connection unit operable to connect said private branch exchange to said public telephone network;
an Internet connection unit operable to connect said private branch exchange to the Internet;
a connection switching unit operable to selectively connect either said public telephone network or the Internet to said private branch exchange;
a detecting unit operable to detect the use condition of a communication line connected to said private branch exchange;
a notification unit operable to notify said public telephone network that only calling is viable to said public telephone network in the case where the communication line connected to said private branch exchange is in use.

2. The gateway device as claimed in claim 1 wherein said notification unit notifies said public telephone network that an outgoing call process and an incoming call process are viable when the communication line connected to said private branch exchange comes to be in an unused state.

3. The gateway device as claimed in claim 1 wherein there are a plurality of units each of which serves as said public telephone network connection unit and wherein, when the communication line connected to said private branch exchange of one of the public telephone network connection units is in use, in accordance with said notification, another public telephone network connection unit serves to make a connection by proxy in response to a connection request issued for said one of the public telephone network connection units.

4. The gateway device as claimed in claim 1 further comprising:
an identifier generation unit operable to generate a caller identifier for identifying an extension telephone connected to said private branch exchange on the basis of a control signal from the extension telephone, and an intended recipient identifier for identifying a communication device of the intended recipient of the extension telephone;
a conversion unit operable to perform conversion between voice signals and packet signals relating to the communication for voice conversation; and
a packet transmitter receiver unit operable to transmit said packet signals to and receive said packet signals from the Internet on the basis of said caller identifier and said intended recipient identifier.

5. The gateway device as claimed in claim 4 further comprising: a determination unit operable in order that said voice signals are output to said public telephone network without conversion into packet signals depending upon said intended recipient identifier.

6. A private branch exchange system operable to switchingly connect between a public telephone network and an extension telephone, comprising:
a public telephone network connection unit operable to connect said extension telephone to said public telephone network;
an Internet connection unit operable to connect said extension telephone to the Internet;
a connection switching unit operable to selectively connect either said public telephone network or the Internet to said extension telephone;
a detecting unit operable to detect the use condition of a communication line connected to said extension telephone;
a notification unit operable to notify said public telephone network that only calling is viable to said public telephone network' in the case where the communication line connected to said extension telephone is in use.

7. The private branch exchange system as claimed in claim 6 wherein said notification unit notifies said public telephone network that an outgoing call process and an incoming call process are viable when the communication line connected to said private branch exchange comes to be in an unused state.

8. The private branch exchange system as claimed in claim 6 wherein there are a plurality of units each of which serves as said public telephone network connection unit and wherein, when the communication line connected to said extension telephone of one of the public telephone network connection units is in use, in accordance with said notification, another public telephone network connection unit serves to make a connection by proxy in response to a connection request issued for said one of the public telephone network connection units.

9. The private branch exchange system as claimed in claim 6 further comprising:
an identifier generation unit operable to generate a caller identifier for identifying an extension telephone connected to said private branch exchange on the basis of a control signal from the extension telephone, and an intended recipient identifier for identifying a communication device of the intended recipient of the extension telephone;
a conversion unit operable to perform conversion between voice signals and packet signals relating to the communication for voice conversation; and
a packet transmitter receiver unit operable to transmit said packet signals to and receive said packet signals from the Internet on the basis of said caller identifier and said intended recipient identifier.

10. The private branch exchange system as claimed in claim 9 further comprising: a determination unit operable in order that said voice signals are output to said public telephone network without conversion into packet signals depending upon said intended recipient identifier.

11. An extension telephone switching method of switchingly connecting between a public telephone network and an extension telephone, comprising:
a step of selectively connecting either said public telephone network or the Internet to said extension telephone;
a step of detecting the use condition of a communication line connected to said extension telephone;
a step of notifying said public telephone network that only calling is viable to said public telephone network in the case where the communication line connected to said extension telephone is in use.

12. The extension telephone switching method as claimed in claim 11 further comprising a step of notifying said public telephone network that an outgoing call process and an incoming call process are viable when the communication line connected to said extension telephone comes to be in an unused state.

13. The extension telephone switching method as claimed in claim 11 wherein there are a plurality of units each of which serves as said public telephone network connection unit, and further comprising a step of making a proxy connection, when the communication line connected to said private branch exchange of one of the public telephone network connection units is in use, by another public telephone network connection unit serves in response to a connection request issued for said one of the public telephone network connection units in accordance with the notification.
